# EUROPÄISCHE PATENTSCHRIFT

(11) **EP 0 483 584 B1**
(45) Veröffentlichungstag und Bekanntmachung des Hinweises auf die Patenterteilung: **19.01.1994**
(21) Anmeldenummer: 91117529.7
(22) Anmeldetag: 15.10.1991
(51) Int. Cl.: F16B 12/10, F16B 12/24

(54) **Beschlag**
Fitting
Accessoire

(30) Priorität: 31.10.1990 DE 9014987 U
(43) Veröffentlichungstag der Anmeldung: 06.05.1992
(73) Patentinhaber: Häfele KG, D-72202 Nagold (DE)
(72) Erfinder: Häsler, Georg, W-7270 Nagold (DE)
(74) Vertreter: Schmid, Berthold, Dipl.-Ing.

(56) Entgegenhaltungen:
- DE-B- 2 702 643
- US-A- 4 693 630

## Beschreibung

Die Erfindung bezieht sich auf einen Beschlag zur lösbaren Verbindung zweier Platten, insbesondere Möbelplatten, mit einem etwa zylinderförmigen Spannteil, welches in einer eine Einführöffnung aufweisenden Ausnehmung den Kopf eines Anzugsbolzens aufnimmt, wobei über einen Teil des Umfangs seiner Seitenwand ein einseitig offener Spannschlitz vorgesehen ist. Bei einem bekannten Beschlag dieser Art wird der Anzugsbolzen in die Ausnehmung gesteckt und dann mittels des Spannteils angezogen. Nachteilig ist hierbei, daß die Möbelplatten bei der Montage so gehalten werden müssen, daß der Anzugsbolzen vor dem Betätigen des Spannteils nicht aus der Ausnehmung herausrutscht. Bei einem anderen ebenfalls bekannten Verbindungsbeschlag für Möbelteile besteht dieser aus zwei topfförmigen Elementen, von denen das eine eine widerhakenförmige elastisch gestaltete Rastzunge aufweist, welche zur vorläufigen Befestigung in eine Rastausnehmung des anderen Elementes eingeführt wird. Eine solche Rastzunge kann jedoch bei Verwendung eines Anzugsbolzens weder an diesem befestigt werden, noch an ihm angreifen (siehe zum Beispiel die DE-B-2702 643).

Die Aufgabe der vorliegenden Erfindung ist darin zu sehen, auch bei einem mit einem Anzugsbolzen zusammenwirkenden Beschlag eine Rastverbindung zu schaffen, welche eine vorläufige Verbindung der Teile ermöglicht.

Zur Lösung dieser Aufgabe wird erfindungsgemäß eine, die Einführöffnung unter das Maß des Kopfdurchmessers des Anzugsbolzens verringernde elastische Verengung vorgeschlagen. Während des Zusammenfügens zweier Platten wird der Anzugsbolzen in die Einführöffnung der Ausnehmung gesteckt und drückt anschließend mit seinem Kopf die elastische Verengung auseinander. Sobald der Kopf die Verengung passiert hat, schließt sich diese wieder und läßt nur eine Öffnung frei, welche unter dem Maß des Kopfdurchmessers des Anzugsbolzens liegt. Damit ist der Anzugsbolzen in der Ausnehmung gegen ein Herausrutschen gesichert. Bei einer Montage brauchen nun die Platten nicht mehr einzeln gehalten zu werden, da sie durch die Verrastung des Kopfes des Anzugsbolzens in ihrer Stellung zueinander gesichert sind. Insbesondere beim Zusammenfügen mehrerer Platten können nun zuerst alle Platten zusammengesteckt werden, bevor sie dann durch Drehen des Spannteils fixiert werden. Damit ist der Zusammenbau der Platten wesentlich vereinfacht worden. Eine besonders bevorzugte Ausführungsform der Erfindung besteht darin, daß die Verengung durch mindestens einen an der Innenfläche der Ausnehmung angeordneten Ansatz gebildet ist.

Um die Elastizität der Verengung zu gewährleisten, sieht eine weitere Ausgestaltung der Erfindung vor, daß der bzw. die Ansätze aus elastischem Material bestehen. Weiterhin kann es auch sehr vorteilhaft sein, daß das Spannteil aus elastischem Material besteht, wobei denkbar ist, daß der bzw. die Ansätze entweder aus unelastischem oder aus elastischem Material bestehen. Für die Herstellung des erfindungsgemäßen Beschlags ist es ferner zweckmäßig, daß der bzw. die Ansätze und das Spannteil einstückig ausgebildet sind.

Damit das Einführen des ganzen Kopfes des Anzugsbolzens in die Ausnehmung gewährleistet ist, sieht eine weitere zweckmäßige Maßnahme vor, daß der bzw. die Ansätze etwa dem Außenrand der Ausnehmung zugeordnet sind. Für die Herstellung des Ansatzes erweist es sich als besonders günstig, wenn dieser wulstartig ausgebildet ist.

Eine weitere Ausführungsform der Erfindung besteht darin, daß an jeder, den Stirnflächen des Spannteils gegenüberliegenden Seiteninnenflächen der Ausnehmung ein Ansatz angeordnet ist. Damit ist die Verengung besonders sicher ausgebildet, denn bei Beschädigung oder Abbrechen eines Ansatzes wird die Einführöffnung immer noch durch den zweiten Ansatz verengt.

Die Verengung der Einführöffnung kann nach einem weiteren Merkmal der Erfindung auch durch die Anordnung einer die Einführöffnung verengenden elastischen und etwa U-förmig geschlitzten Abdeckung erfolgen, wobei die Längsachse des U-Schlitzes etwa senkrecht zur Drehachse des Spannteils verläuft. Zweckmäßigerweise ist die insbesondere aus einem Blech bestehende Abdeckung dabei winkelförmig abgebogen, wobei der ungeschlitzte Winkelarm in der Seitenwand des Spannteils verankert ist. Durch eine solche Abdeckung erreicht man zusätzlich noch eine Verstärkung des Spannteils gegen Aufbiegung.

Die Zeichnung zeigt zwei Ausführungsbeispiele der Erfindung. Hierbei stellen dar:

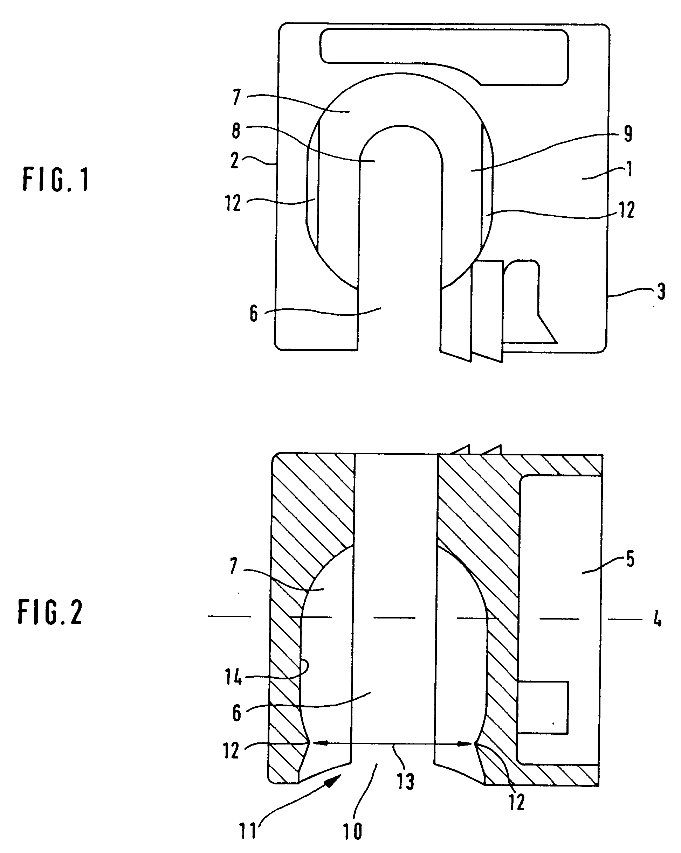

- Fig. 1: Eine Ansicht des Spannteils des erfindungsgemäßen Beschlags,
- Fig. 2: einen Längschnitt nach Fig. 1
- Fig. 3: den Längsschnitt einer anderen Ausführungsform mit eingesetztem abgebrochenen Anzugsbolzen,
- Fig. 4: einen Querschnitt nach Fig. 3 ohne Anzugsbolzen.

Das zylinderförmige Spannteil des Beschlags weist eine Seitenwand 1 mit den beiden Stirnflächen 2, 3 auf. An der als Deckelfläche ausgebildeten Stirnfläche 3 ist eine zentrisch zur Drehachse 4 des Spannteils angeordnete Aufnahme 5 für ein nicht dargestelltes Betätigungsglied angebracht. Die Seitenwand 1 weist einen einseitig offenen Spannschlitz 6 auf, welcher sich entlang einer Ausnehmung 7 für den Kopf eines nicht dargestellten Anzugsbolzens erstreckt. Ein Ende 8 des Spannschlitzes 6 mündet in ein pfannenförmiges Ende 9 der Ausnehmung 7. Das andere Ende 10 des Spannschlitzes 6 ist einer mit der Ausnehmung 7 einstückig ausgebildeten Einführöffnung 11 für den Kopf des Anzugsbolzens zugeordnet.

An der Einführöffnung 11 ist eine elastische Verengung 12 ausgebildet, deren Breite 13 geringer ist als der Kopfdurchmesser des Anzugsbolzens. Die Verengung 12 wird durch zwei an der Seiteninnenfläche 14 der Ausnehmung 7 angeordnete Ansätze gebildet.

Während des Zusammenfügens zweier Platten wird der Anzugsbolzen in die Einführöffnung 11 gebracht und drückt dabei die elastische Verengung 12 auseinander. Sobald sich der Kopf in der Ausnehmung 7 befindet, hat sich die Breite 13 der Verengung wieder unter das Maß des Kopfdurchmessers des Anzugsbolzens verringert. Damit sind sowohl der Anzugsbolzen im Spannteil als auch die Platten zueinander gesichert, wodurch die Montage der Platten wesentlich vereinfacht wird.

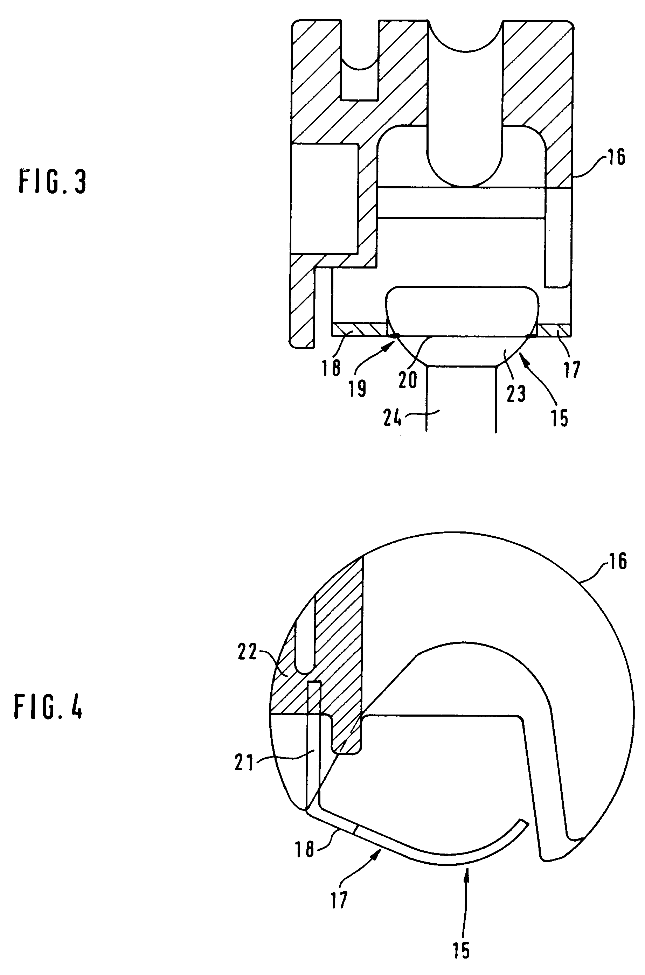

Im Ausführungsbeispiel nach den Fign. 3 und 14 wird die Einführöffnung 15 des Spannteils 16 durch ein als Abdeckung ausgebildetes elastisches Blech 17 verringert. Dieses ist winkelförmig ausgebildet, wobei der vor der Einführöffnung 15 liegende Winkelarm 18 durch eine leichte Abbiegung der Form des Spannteils 16 angepaßt ist und einen U-förmigen Längsschlitz 19 aufweist. Durch die Breite 20 des U-Schlitzes 19, dessen Längsachse etwa senkrecht zur Drehachse des Spannteils 16 verläuft, wird die Verengung der Einführöffnung 15 bestimmt. Der andere Winkelarm 21 des Blechs 17 ist in der Seitenwand 22 des Spannteils 16 verankert und verstärkt diese gegen Aufbiegung. Aus Fig. 3 ist die Raststellung des Kopfes 23 des Anzugsbolzens 24 zu erkennen.

## Patentansprüche

1. Beschlag zur lösbaren Verbindung zweier Platten, insbesondere Möbelplatten, mit einem etwa zylinderförmigen Spannteil, welches in einer eine Einführöffnung (11) aufweisenden Ausnehmung (7) den Kopf eines Anzugsbolzens aufnimmt, wobei über einen Teil des Umfangs seiner Seitenwand (1) ein einseitig offener Spannschlitz (6) vorgesehen ist, gekennzeichnet durch eine die Einführöffnung (11) unter das Maß des Kopfdurchmessers des Anzugsbolzens verringernde elastische Verengung (12).

2. Beschlag nach Anspruch 1, dadurch gekennzeichnet, daß die Verengung (12) durch mindestens einen an der Innenfläche (14) der Ausnehmung (7) angeordneten Ansatz (12) gebildet ist.

3. Beschlag nach einem oder beiden der Ansprüche 1 und 2, dadurch gekennzeichnet, daß der bzw. die Ansätze (12) aus elastischem Material bestehen.

4. Beschlag nach einem oder beiden der Ansprüche 1 und 2, dadurch gekennzeichnet, daß das Spannteil aus elastischem Material besteht.

5. Beschlag nach wenigstens einem der vorhergehenden Ansprüche 2 bis 4, dadurch gekennzeichnet, daß der bzw. die Ansätze und das Spannteil einstückig ausgebildet sind.

6. Beschlag nach wenigstens einem der vorhergehenden Ansprüche 2 bis 5, dadurch gekennzeichnet, daß der bzw. die Ansätze etwa dem Außenrand der Ausnehmung (7) zugeordnet sind.

7. Beschlag nach wenigstens einem der vorhergehenden Ansprüche 2 bis 6, dadurch gekennzeichnet, daß der bzw. die Ansätze wulstartig ausgebildet sind.

8. Beschlag nach wenigstens einem der vorhergehenden Ansprüche 2 bis 7, dadurch gekennzeichnet, daß an jeder, den Stirnflächen (2, 3) des Spannteils gegenüberliegenden Seiteninnenfläche (14) der Ausnehmung (7) ein Ansatz (12) angeordnet ist.

9. Beschlag nach Anspruch 1, dadurch gekennzeichnet, daß vor der Einführöffnung (15) eine diese verengende, elastische und etwa U-förmig geschlitzte (19) Abdeckung (17) so angeordnet ist, daß die Längsachse des U-Schlitzes (19) etwa senkrecht zur Drehachse des Spannteils (16) verläuft.

10. Beschlag nach Anspruch 9, dadurch gekennzeichnet, daß die insbesondere aus einem Blech bestehende Abdeckung (17) winkelförmig abgebogen ist, wobei der ungeschlitzte Winkelarm (21) in der Seitenwand (22) des Spannteils (16) verankert ist.

## Claims

1. A fitting for the separable connection of two panels, particularly furniture panels, with a substantially cylindrical clamping part which accommodates the head of a tightening bolt in a recess (7) in which there is an insertion aperture (11), a clamping slot (6) open on one side being provided over a part of the periphery of its side wall (1), characterised by a resilient narrowing (12) which reduces the insertion aperture (11) to less than the diameter of the head of the tightening bolt.

2. A fitting according to Claim 1, characterised in that the narrowing (12) is formed by at least one projecting part (12) disposed on the inside face (14) of the recess (7).

3. A fitting according to one or both of Claims 1 and 2, characterised in that the projecting member(s) (12) consist(s) of a resilient material.

4. A fitting according to one or both of Claims 1 and 2, characterised in that the clamping part consists of resilient material.

5. A fitting according to at least one of the preceding Claims 2 to 4, characterised in that the projecting member(s) and the clamping part are constructed in one piece.

6. A fitting according to at least one of the preceding Claims 2 to 5, characterised in that the projecting member(s) is or are substantially associated with the outer rim of the recess (7).

7. A fitting according to at least one of the preceding Claims 2 to 6, characterised in that the projecting member(s) is or are of bead-like construction.

8. A fitting according to at least one of the preceding Claims 2 to 7, characterised in that a projecting member (12) is disposed on each interior lateral face (14) of the recess (7) opposite the end faces (2, 3) of the clamping part.

9. A fitting according to Claim 1, characterised in that a resilient covering (17) slotted at (19) substantially in a U-shape is so disposed in front of and narrows the insertion aperture (15) that the longitudinal axis of the U-shaped slot (19) extends substantially at right-angles to the axis of rotation of the clamping part (16).

10. A fitting according to Claim 9, characterised in that the covering (17) which consists in particular of sheet metal, is bent over angularly, the unslotted arm (21) of the angled member being anchored in the side wall (22) of the clamping part (16).

## Revendications

1. Accessoire pour relier deux plaques, en particulier des plaques de mobilier, de façon détachable l'une à l'autre, comprenant une pièce de bridage à peu près cylindrique qui reçoit dans un évidement (7) présentant une ouverture d'introduction (11) la tête d'un boulon de serrage, avec prévision, sur une partie du pourtour de la paroi latérale (1) de la pièce, d'une fente de bridage (6) ouverte d'un côté, caractérisé par un rétrécissement élastique (12) qui réduit l'ouverture d'introduction (11) sous la dimension du diamètre de la tête du boulon de serrage.

2. Accessoire selon la revendication 1, caractérisé en ce que le rétrécissement (12) est formé par au moins une saillie (12) placée sur la surface intérieure (14) de l'évidement (7).

3. Accessoire selon l'une des revendications 1 et 2, ou les deux, caractérisé en ce que la ou les saillies (12) sont en matériau élastique.

4. Accessoire selon l'une des revendications 1 et 2, ou les deux, caractérisé en ce que la pièce de bridage est en matériau élastique.

5. Accessoire selon au moins l'une des revendications 2 à 4 précédentes, caractérisé en ce que la ou les saillies et la pièce de bridage sont réalisées d'un seul tenant.

6. Accessoire selon au moins l'une des revendications 2 à 5 précédentes, caractérisé en ce que la ou les saillies sont coordonnées à peu près au bord extérieur de l'évidement (7).

7. Accessoire selon au moins l'une des revendications 2 à 6 précédentes, caractérisé en ce que la ou les saillies sont réalisées à la façon d'un bourrelet.

8. Accessoire selon au moins l'une des revendications 2 à 7 précédentes, caractérisé en ce qu'une saillie (12) est placée sur chaque face latérale intérieure (14) de l'évidement (7) située à l'opposé des faces d'extrémité (2, 3) de la pièce de bridage.

9. Accessoire selon la revendication 1, caractérisé en ce qu'un recouvrement élastique (17), fendu à peu près en U (19), est disposé devant l'ouverture d'introduction (15), en la rétrécissant, de manière que l'axe longitudinal de la fente en U (19) soit à peu près perpendiculaire à l'axe de rotation de la pièce de bridage (16).

10. Accessoire selon la revendication 9, caractérisé en ce que le recouvrement (17), réalisé en particulier en tôle, est coudé en équerre, la branche (21) non fendue de l'équerre étant ancrée dans la paroi latérale (22) de la pièce de bridage (16).
